(19) Europäisches Patentamt
European Patent Office
Office européen des brevets

(11) EP 1 258 519 A1

(12) EUROPEAN PATENT APPLICATION

(43) Date of publication:
20.11.2002 Bulletin 2002/47

(51) Int Cl.[7]: C09J 153/00

(21) Application number: 02010479.0

(22) Date of filing: 08.05.2002

(84) Designated Contracting States:
AT BE CH CY DE DK ES FI FR GB GR IE IT LI LU MC NL PT SE TR
Designated Extension States:
AL LT LV MK RO SI

(30) Priority: 10.05.2001 JP 2001140087

(71) Applicant: Nippon Shokubai Co., Ltd.
Osaka-shi, Osaka 541-0043 (JP)

(72) Inventor: Kobayashi, Nobuhiro
Toyonaka-shi, Osaka 560-0001 (JP)

(74) Representative: Henkel, Feiler, Hänzel
Möhlstrasse 37
81675 München (DE)

# (54) Block copolymer and its uses

(57) The present invention provides a block polymer, which gives effective adhesive power even to a mirror-face-processed adherend that involves a low anchor effect of pressure sensitive adhesives and is therefore difficult to adhere to, and further, which block polymer has excellent tackiness properties. This block polymer is a block polymer obtained by a process including the step of polymerizing a monomer component including a monomer as an essential component wherein the monomer has a carboxyl group in its molecule and wherein a homopolymer of the monomer has a glass transition temperature of lower than 0 °C. A pressure sensitive adhesive comprises this block polymer.

EP 1 258 519 A1

## Description

## BACKGROUND OF THE INVENTION

### A. TECHNICAL FIELD

The present invention relates to: a block polymer, which is excellent in adhesion to a mirror-face-processed adherend that is a material difficult to adhere to, and which further has excellent balance of tackiness properties when it is used as pressure sensitive adhesives; and its uses.

### B. BACKGROUND ART

The mirror-face-processed adherend is an adherend that is difficult to adhere to in comparison with an adherend that is ground with waterproof sandpaper of No. 280 provided in JIS-Z 0237 relating to industrial standards of pressure sensitive adhesive tapes and sheets. Although not apparent, the reason therefor is though to be that the face roughness of the mirror-face-processed adherend is about 0.05 micron and is less than that of the adherend as ground with waterproof sandpaper of No. 280, and that the anchor effect of pressure sensitive adhesives is accordingly low.

As a method to improve the adhesion to the mirror-face adherend that is such a material difficult to adhere to, it is effective to use a polymer as obtained by a process including the step of polymerizing monomers containing a polar group as represented by a carboxyl group (for example, acrylic acid and methacrylic acid). The adhesion of this polymer to the mirror-face adherend is improved by having the carboxyl group.

However, this polymer having the carboxyl group has problems such that the increase in the amount of the carboxyl group can provide an adhesion-improving effect, but greatly decreases the tack and adhesive strength.

## SUMMARY OF THE INVENTION

### A. OBJECT OF THE INVENTION

Accordingly, an object of the present invention is to provide: a polymer, which gives effective adhesive power even to a material difficult to adhere to such as mirror-face-processed adherend, and further is also excellent in tack, adhesive strength, and cohesive strength; and its uses, namely, a pressure sensitive adhesive composition comprising this polymer.

### B. DISCLOSURE OF THE INVENTION

The present inventor diligently studied to solve the above-mentioned problems. As a result, he has found out that the above problems can be solved if a monomer of which the homopolymer has a low glass transition temperature (namely, lower than 0 °C) is used as the monomer to provide the polymer with the carboxyl group. In addition, he found out that: if the structure of the polymer is formed into a block structure, the polymer has sufficient cohesive strength even without post-crosslinking treatment and can be used for hot-melt coating. Thus, the present invention has been completed.

On the basis of the findings of the present inventor, as to polymers as obtained by polymerizing carboxyl-group-containing monomers such as acrylic acid and methacrylic acid, the tack is so low that the sufficient adhesive strength cannot be obtained, because the carboxyl group is easily oriented toward the surface of the pressure sensitive adhesive, and because a homopolymer of the acrylic acid or methacrylic acid has a high glass transition temperature. However, the improvement of the tack and the adhesive strength can be made by lowering the glass transition temperature of a homopolymer of the carboxyl-group-containing monomer. In addition, forming the structure of the polymers into a block structure gives sufficient cohesive strength to the polymers even without post-crosslinking treatment and further enables the use for hot-melt coating.

By the way, in JP-A-112764/1993, there is described an example of a pressure sensitive adhesive composition obtained by a process including the step of copolymerizing a monomer which has a carboxyl group in its molecule and of which the homopolymer has a glass transition temperature of lower than 0 °C. This prior art is for the purposes of providing a pressure sensitive adhesive which is easily soluble in an aqueous alkaline solution and has excellent waterproofness and tackiness properties, and relates to a pressure sensitive adhesive comprising a polymer obtained by a process including the step of polymerizing a monomer component including, in a ratio of 10 to 70 weight %, a radically polymerizable monomer of which the homopolymer has a Tg (glass transition temperature) of not higher than -20 °C.

Japanese Patent No. 2627719 discloses a pressure sensitive adhesive composition, which is for the purposes

of improving cohesive strength at high temperature and solvent resistance to polar solvents and comprises a polymer obtained by a process including the step of polymerizing a monomer component including, in a ratio of 0.1 to 8 weight %, a polymerizable monomer as obtained by addition of ε-caprolactone or δ-valerolactone to 2-hydroxyethyl (meth) acrylate. Even in this prior art, the polymer is obtained by using a monomer which has a carboxyl group in its molecule and of which the homopolymer has a glass transition temperature of lower than 0 °C

However, none of the polymers as used in these prior arts is a block polymer. In addition, if these prior art polymers are considered from the viewpoint of the properties as shown in the Examples portions of the specifications of the prior arts, none of the prior art polymers is what attains the object intended by the present invention, namely, what has excellent adhesion to a mirror-face-processed adherend (which is a material difficult to adhere to) and further has excellent balance of tackiness properties when it is used as a pressure sensitive adhesive.

On the other hand, in acrylic block polymers as described in publicly known literatures, there is not used the monomer which has a carboxyl group in its molecule and of which the homopolymer has a glass transition temperature of lower than 0 °C.

A block polymer according to the present invention, which has been completed by way of the aforementioned consideration, is a block polymer obtained by a process including the step of polymerizing a monomer component including a monomer as an essential component wherein the monomer has a carboxyl group in its molecule and wherein a homopolymer of the monomer has a glass transition temperature of lower than 0 °C.

In the above, it is favorable that the block polymer according to the present invention is an acrylic block polymer comprising (meth)acrylate ester structural units in a ratio of 50 to 100 weight % of the entirety; and it is favorable that the block polymer according to the present invention is a polymer obtained by a process including a multistage polymerization step in the presence of a polyvalent mercaptan; and it is favorable that the multistage polymerization step is a multistage polymerization step which includes at least a first-stage polymerization step and a second-stage polymerization step wherein the polymerizations in the polymerization steps are carried out using monomer components having compositions different between the polymerization steps.

A pressure sensitive adhesive composition, according to the present invention, comprises the block polymer that has the above-mentioned characteristics, and displays particularly excellent performance as a composition for a hot-melt use.

These and other objects and the advantages of the present invention will be more fully apparent from the following detailed disclosure.

## DETAILED DESCRIPTION OF THE INVENTION

Hereinafter, the present invention is explained in further detail.

The block polymer, according to the present invention, is a block polymer obtained by a process including the step of polymerizing a monomer component including a monomer as an essential component wherein the monomer has a carboxyl group in its molecule and wherein a homopolymer of the monomer has a glass transition temperature of lower than 0 °C.

In the present invention, although not limited, the amount of the aforementioned specific monomer as used, which has a carboxyl group in its molecule and of which the homopolymer has a glass transition temperature of lower than 0 °C, is favorably in the range of 1 to 20 weight %, more favorably 1 to 10 weight %, of the entirety of the aforementioned monomer component. In the case where the amount of the aforementioned specific monomer as used is smaller than 1 weight %, the adhesion to a mirror-face adherend tends to deteriorate when the polymer is used for a pressure sensitive adhesive composition. In the case where the amount is larger than 20 weight %, the tack is decreased.

Specific examples of the aforementioned specific monomer which has a carboxyl group in its molecule and of which the homopolymer has a glass transition temperature of lower than 0 °C include: succinic acid monohydroxyethyl (meth)acrylate; and compounds obtained by addition of at least 1 mol of ε-caprolactone to 1 mol of (meth)acrylic acid and represented by the following general formula (1); compounds obtained by addition of at least 1 mol of ε-caprolactone to 1 mol of 2-hydroxyethyl (meth)acrylate and represented by the following general formula (2); and compounds obtained by reaction between polyethylene glycol mono(meth)acrylate or polypropylene glycol mono(meth) acrylate and acid anhydrides. These can be used arbitrarily in combinations with each other.

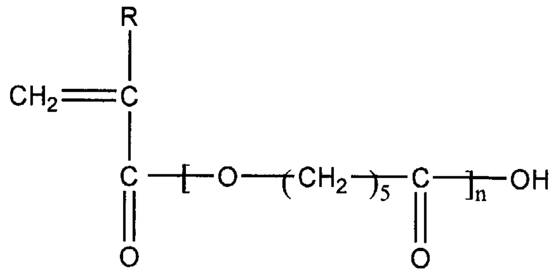

(1)

(wherein R represents a hydrogen atom or a methyl group, and n denotes an integer of not smaller than 1)

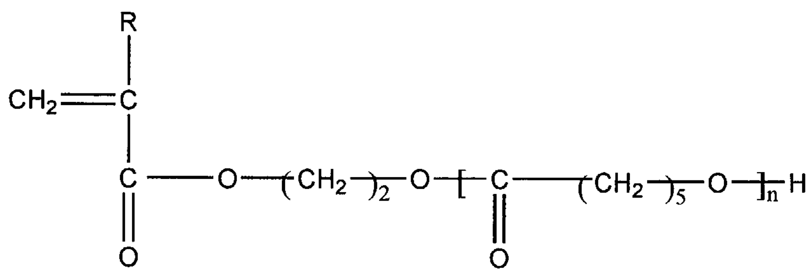

(2)

(wherein R represents a hydrogen atom or a methyl group, and n denotes an integer of not smaller than 1)

In the block polymer according to the present invention, it is also possible to use the above monomers jointly with a monomer of which the homopolymer has a glass transition temperature of not lower than 0 °C and which has a carboxyl group in its molecule, such as represented by (meth)acrylic acid. In such a case, the amount of this monomer as used is favorably not larger than 5 weight % of the entirety of the aforementioned monomer component, because, in the case where the amount is larger than 5 weight %, the tack tends to decrease.

In the block polymer according to the present invention, one of favorable modes for carrying out the invention is a block polymer as obtained by a process including the step of polymerizing monomer components including both the following monomers as essential components: a monomer which has a carboxyl group in its molecule and of which the homopolymer has a glass transition temperature of not lower than 0 °C; and a monomer which has a carboxyl group in its molecule and of which the homopolymer has a glass transition temperature of lower than 0 °C. This is because both the tackiness properties of the block polymer and its adhesion to adherends can be improved by jointly using these two carboxyl-group-containing monomers of which the homopolymers have different glass transition temperatures.

As to polymerizable monomers other than the aforementioned, in the present invention, any monomer can be used if homopolymers or copolymers thereof are produced by radical polymerization. Examples thereof include: (meth)acrylates, represented by such as alkyl (meth)acrylates having 1 to 30 carbon atoms, hydroxyethyl (meth)acrylate, hydroxypropyl (meth)acrylate, glycidyl (meth)acrylate, methoxyethyl (meth)acrylate, ethoxyethyl (meth)acrylate, and ethoxyethoxyethyl (meth)acrylate; styrene monomers, represented by such as $\alpha$-methylstyrene, vinyltoluene, and styrene; maleimide monomers, represented by such as phenylmaleimide and cyclohexylmaleimide; vinyl ether monomers, represented by such as methyl vinyl ether, ethyl vinyl ether, and isobutyl vinyl ether; fumaric acid, monoalkyl fumarates, dialkyl fumarates; maleic acid, monoalkyl maleates, dialkyl maleates; itaconic acid, monoalkyl itaconates, dialkyl itaconates; and (meth)acrylonitrile, butadiene, isoprene, vinyl chloride, vinylidene chloride, vinyl acetate, vinyl ketones, vinylpyridine, vinylpyrrolidone, and vinylcarbazole. These can be used either alone respectively or in combinations with each other.

When the block polymer according to the present invention is obtained by the multistage polymerization step, a favorable combination of the respective polymer segments comprises a combination of: a polymer segment having a glass transition temperature of not lower than 0 °C; and a polymer segment having a glass transition temperature of lower than 0 °C. Specifically, a block polymer which is a favorable mode for carrying out the invention can be obtained by the multistage polymerization step including the first-stage polymerization step and the second-stage polymerization step, wherein the first-stage polymerization step is a step of polymerizing a monomer component so that the monomer component for a first polymer segment will have a glass transition temperature of not lower than 0 °C on calculation, thereby obtaining the first polymer segment, and wherein the second-stage polymerization step is a step of polymerizing

a monomer component so that the monomer component for a second polymer segment will have a glass transition temperature of lower than 0 °C on calculation, thereby obtaining the second polymer segment.

As to the monomer component used as the first polymer component, methyl methacrylate and styrene are particularly favorable. As to the monomer component used as the second polymer component, ethyl acrylate, n-butyl acrylate, 2-ethylhexyl acrylate, n-octyl acrylate, i-octyl acrylate, butadiene, and isoprene are particularly favorable.

Herein, the glass transition temperature of the polymer segment means a value that is calculated from Fox's equation represented by the following equation:

$$1/(Tg + 273) = \Sigma\ (Wi/(Tgi + 273)): \text{Fox's equation}$$

Tg (°C): glass transition temperature
Wi: weight fraction of each monomer component
Tgi: glass transition temperature of homopolymer of each monomer component

It is known that a block polymer comprising a combination of polymer segments having different glass transition temperatures, generally, has a micro phase separation structure. Such a block polymer has high cohesive strength and excellent heat resistance in comparison with conventional general pressure sensitive adhesives because the polymer segment having a high glass transition temperature forms a discontinuous phase and a pseudo-crosslinked structure. On the other hand, the polymer segment having a low glass transition temperature forms a continuous phase to produce tackiness. In this case, the lower the glass transition temperature is, the higher the effect for improving tackiness is.

There is no especial limitation with regard to the favorable production process for the block polymer according to the present invention if this production process gives a polymer which has in its molecule the following: polymer segments having glass transition temperatures of not lower than 0 °C; and polymer segments having glass transition temperatures of lower than 0 °C. Examples of the production process for the block polymer having such a structure include: living anion polymerization; living radical polymerization with such as iniferters and 2,2,6,6-tetramethyl-1-piperidinyloxy; copolymerization with macromonomers; and radical polymerization in the presence of a polyvalent mercaptan. The radical polymerization in the presence of a polyvalent mercaptan is a favorable production mode in the present invention from the viewpoint of: properties of the polymer as obtained, simplicity of polymerization step; and production costs.

In the present invention, when a favorable production mode is carried out by carrying out a process including at least two steps of radical polymerization using polymerizable monomers different between these steps in the presence of a polyvalent mercaptan, the following polyvalent mercaptans can be used.

Examples thereof include: diesters as formed from diols (e.g. ethylene glycol and 1,4-butanediol) and carboxyl-group-containing mercaptans, such as ethylene glycol dithioglycolate, ethylene glycol dithiopropionate, 1,4-butanediol dithioglycolate, and 1,4-butanediol dithiopropionate; triesters as formed from triols (e.g. trimethylolpropane) and carboxyl-group-containing mercaptans, such as trimethylolpropane trithioglycolate and trimethylolpropane trithiopropionate; polyesters as formed from compounds having four hydroxyl groups (e.g. pentaerythritol) and carboxyl-group-containing mercaptans, such as pentaerythritol tetrakisthioglycolate and pentaerythritol tetrakisthiopropionate; polyester compounds as formed from compounds having six hydroxyl groups (e.g. dipentaerythritol) and carboxyl-group-containing mercaptans, such as dipentaerythritol hexakisthioglycolate and dipentaerythritol hexakisthiopropionate; polyester compounds as formed from other compounds having three or more hydroxyl groups and carboxyl-group-containing mercaptans; compounds having three or more mercapto groups, such as trithioglycerol; triazine polythiols, such as 2-di-n-butylamino-4,6-dimercapto-S-triazine and 2,4,6-trimercapto-S-triazine; compounds as obtained by adding hydrogen sulfide to two or more epoxy groups of polyvalent epoxy compounds to thereby introduce two or more mercapto groups; ester compounds as obtained by esterifying two or more carboxyl groups of polyvalent carboxylic acids with mercaptoethanol. These may be used either alone respectively or in combinations with each other. Herein, the carboxyl-group-containing mercaptans are compounds having one mercapto group and one carboxyl group, such as thioglycolic acid, mercaptopropionic acid, and thiosalicylic acid.

When the block polymer is produced by using the polyvalent mercaptan, conventional radical polymerization initiators may be used for the polymerization. Examples thereof include: azo initiators such as 2,2'-azobisisobutyronitrile and 2,2'-azobis(2-methylbutyronitrile); and peroxide polymerization initiators such as benzoyl peroxide. The amount of these as used is usually not larger than 1/3, favorably not larger than 1/5, in terms of weight ratio to the polyvalent mercaptan. In the case where the polymerization initiator is used in an amount larger than the above ratio, not only the polymer segments extending from the polyvalent mercaptan to give the block polymer but also a large amount of polymers extending from the polymerization initiator tends toward forming to lower the production efficiency of the block polymer and further to deteriorate the properties of the resultant polymer.

In the present invention, the radical polymerization may be carried out by general radical polymerization methods such as bulk polymerization, solution polymerization, suspension polymerization, and emulsion polymerization. The polymerization temperature is favorably in the range of 30 to 200 °C, more favorably 50 to 150 °C.

Hereinafter explained is a favorable production process to obtain the block polymer according to the present invention, namely, a process including at least two steps of radical polymerization using polymerizable monomers different between these steps in the presence of a polyvalent mercaptan.

The use of this production process gives the block polymer according to the present invention in the form of a star-shaped block polymer having at least three chain polymer segments radially extending from the sulfur residue of the polyvalent mercaptan as the central portion, wherein the star-shaped block polymer has a weight-average molecular weight enough to display good tackiness properties and tack, but its melt viscosity can be set low when the heating is carried out. As a result, good hot-melt coatability can be achieved. Accordingly, the pressure sensitive adhesive composition for hot-melt coating, which comprises the block polymer as obtained by the aforementioned favorable production mode, is a favorable mode as the mode for carrying out the present invention use.

The procedure of the production in the aforementioned favorable production mode is as follows. The radical polymerization of a first polymerizable monomer component to form polymer segments having glass transition temperatures of not lower than 0 °C is carried out in the presence of a polyvalent mercaptan as a first stage. After the polymerization conversion has reached not less than 50 %, favorably not less than 60 %, a second polymerizable monomer component to form polymer segments having glass transition temperatures of lower than 0 °C is added thereto to carry out polymerization as a second stage. The reason why the polymerization conversion of the first radical polymerization is caused to reach not less than 50 % is that, even if the next polymerization step is carried out without removing the residual polymerizable monomer after the first polymerization, the properties of the polymer to form blocks can be made different as much as possible. However, it is also possible to remove the polymerizable monomer by volatilization after the first polymerization.

If the above polymerization step is carried out a plurality of times via more multiple step, a block polymer having at least three different polymer block structures can be obtained.

In favorable modes for carrying out the present invention, the monomer component including as an essential component the monomer which has a carboxyl group in its molecule and of which the homopolymer has a glass transition temperature of lower than 0 °C may be included in the polymerizable monomer component as used in the first stage that is the above polymerization step, or may be used in the above second stage. In consideration of the viewpoint of improving the adhesion to a mirror-face adherend in the present invention, it is more effective to use in the second stage the monomer component having a low glass transition temperature which will form the continuous phase.

The pressure sensitive adhesive composition, according to the present invention, comprises the above block polymer according to the present invention. When the amount of the pressure sensitive adhesive composition is regarded as 100 weight %, the content of the above block polymer is favorably in the range of 50 to 100 weight %, more favorably 60 to 100 weight %, still more favorably 70 to 100 weight %. In the case where the content is outside this range, the good tackiness properties may not be obtained. If necessary, polymers other than the block polymer according to the present invention can be used jointly therewith within the above content range to use the resultant composition as the pressure sensitive adhesive composition.

The pressure sensitive adhesive composition, according to the present invention, may further comprise other additives, if necessary.

Examples of the additives include tackifiers such as rosin resins, terpene resins, aliphatic petroleum resins, aromatic petroleum resins, coumarone-indene resins, alkylphenol resins, and xylene resins. Of these resins, at least one resin can be used. The amount of the tackifier as used is favorably smaller than 100 parts by weight per 100 parts by weight of the polymer.

As to the other additives, there is wax further. Examples of the wax include: natural wax, paraffin wax, polypropylene wax, polyethylene wax, and (meth)acrylate polymers with a saturated alkyl group having not fewer than 18 carbon atoms. Of these waxes, at least one kind of wax can be used. The amount of the wax as used is favorably smaller than 100 parts by weight per 100 parts by weight of the polymer.

As to the other additives, furthermore, there is at least one compound selected from the group consisting of: compounds usable as plasticizers, such as phthalate esters and adipate esters; fillers, such as silica powders and titanium dioxide; antioxidants, such as dithiocarbamate salts and phenol compounds. The amount of these additives is, for example, an amount that is conventionally employed.

From the pressure sensitive adhesive composition according to the present invention, there may be obtained such as a tape by coating a base material (for example, a polyester film) with the pressure sensitive adhesive composition in a state of a polymer solution, and then drying the volatile content. If necessary, conventional crosslinking agents, such as isocyanate compounds and epoxy compounds, may be used. In addition, the volatile content is beforehand removed, and then the resultant polymer can also be used as a hot-melt pressure sensitive adhesive for coating in a melting state.

When the pressure sensitive adhesive composition is a solvent-type pressure sensitive adhesive, it is favorably used as a pressure sensitive adhesive in the following way: a functional group such as a hydroxyl group or a carboxyl group is introduced into the polymer as used; and then a base material is coated with a solvent-type pressure sensitive adhesive coating liquid of the form as prepared by adding into the polymer a crosslinking agent having a functional group, such as isocyanate compounds (if the functional group as introduced into the polymer is a hydroxyl group) or epoxy compounds (if the functional group as introduced into the polymer is a carboxyl group); and then the coated liquid is dried and then cured. The formation of the solvent-type pressure sensitive adhesive by further comprising the crosslinking agent can give a pressure sensitive adhesive having excellent heat resistance such as tackiness properties at high temperature. The amount of the crosslinking agent as used may fitly be determined in consideration of the amount of the functional group in the polymer. For example, the amount of the crosslinking agent is in the range of 0.1 to 10 weight % relative to the polymer amount of the solvent-type pressure sensitive adhesive.

In the present invention, with regard to the melt pressure sensitive adhesive composition designed for hot-melt coating there is no especial limitation if this composition melts by heating to become liquid, and thereby can be coated by what are used generally as hot-melt coating apparatuses, such as foil-type hot-melt applicators, nozzle-type hot-melt applicators, hot-melt roll coaters, hot-melt extrusion coaters, and hot-melt slot orifice coaters.

When the block polymer according to the present invention is used as a pressure sensitive adhesive, it has both characteristics such that: the adhesion to the mirror-face adherend that is a material difficult to adhere to is improved because the carboxyl group of the block polymer is oriented toward the surface of the pressure sensitive adhesive; and on the other hand, much decrease of tack, which is observed when using a conventional monomer of which the homopolymer has a glass transition temperature of not lower than 0 °C such as (meth)acrylic acid, is little because the homopolymer of the monomer having the carboxyl group has a glass transition temperature of lower than 0 °C.

(Effects and Advantages of the Invention):

When the novel block polymer according to the present invention is, for example, used as a pressure sensitive adhesive, excellent adhesion to the mirror-face adherend is compatible with excellent tackiness properties.

As to polymers of monomers which have a carboxyl group in their molecules and of which the homopolymers have glass transition temperatures of not lower than 0 °C (e.g. (meth)acrylic acid) as conventional means for improving the adhesion to the mirror-face adherend, the adhesion becomes better as the amount of the monomer is increased, but there is brought about a rise in the glass transition temperature of the surface of the pressure sensitive adhesive, with the result that there are caused bad effects such as lowering of ball tack and adhesive strength. In comparison, as to the block polymer according to the present invention, because the polymerizable monomer as used to form this polymer is a monomer which has a carboxyl group in its molecule and of which the homopolymer has a glass transition temperature of lower than 0 °C, the glass transition temperature of the surface of the pressure sensitive adhesive does not rise so much even if the amount of this monomer is increased; therefore the above block polymer has excellent tackiness properties and further can also obtain an effect improving the adhesion to the mirror-face adherend, which effect is derived from the carboxyl group. Specifically, the characteristics of the aforementioned specific monomer and the properties of the block polymer correlate to each other wherein the properties of the block polymer include high cohesive strength and excellent heat resistance, and, as a result, very good tackiness properties can be obtained.

The block polymer according to the present invention has such a low melt viscosity that the hot-melt coating can be carried out, but has sufficiently usable cohesive strength and properties in practice nevertheless. Particularly, this block polymer can provide a pressure sensitive adhesive for hot-melt coating, which is excellent in balance between the low melt viscosity and the cohesive strength wherein the low melt viscosity produces good workability under conditions where an atmosphere of from room temperature to middle temperature, namely, of lower than 80 °C, is used.

Because the block polymer according to the present invention has polymer segments of which the glass transition temperatures are not lower than 0 °C and because these polymer segments of which the glass transition temperatures are not lower than 0 °C act as pseudo-crosslinking sites, this polymer gives a pressure sensitive adhesive for hot-melt coating, which is excellent in cohesive strength and properties at higher temperature. Of the block polymers according to the present invention, the star-shaped block polymer having at least three chain polymer segments radially extending from the sulfur residue of the polyvalent mercaptan as the central portion has a branched structure, and therefore has a low melt viscosity even if its molecular weight is high, when compared with linear chain polymers. Therefore, this star-shaped block polymer gives a hot-melt pressure sensitive adhesive that has excellent coatability.

When the pressure sensitive adhesive composition according to the present invention is used for hot-melt, it is free from volatile components such as solvents and water, therefore it does not need any drying step, and it accordingly has a high productivity and cost merits, and can be said to be a favorable using mode also in view of environmental problems.

## DETAILED DESCRIPTION OF THE PREFERRED EMBODIMENTS

Hereinafter, the present invention is more specifically illustrated by the following examples of some preferred embodiments in comparison with comparative examples not according to the invention. However, the invention is not limited to the below-mentioned examples.

Hereinafter, the units "%" and "part(s)" denote "weight %" and "part(s) by weight" respectively. Incidentally, the number-average molecular weight (Mn) and the weight-average molecular weight (Mw) were determined in terms of polystyrene by gel permeation chromatography (GPC).

The properties as the hot-melt pressure sensitive adhesive were measured according to the following methods.

<Preparation of sample>

The sample was prepared by melt-coating a PET film with the hot-melt pressure sensitive adhesive by a GPD coater (produced by Yuri Roll Machine Co., Ltd.) so that the coating-film thickness would be 50 μm.

<Ball tack>

The measurement was carried out at 23 °C according to J. Dow method as provided in JIS Z-0237, and the number (No.) of stopped balls was listed.

<Adhesive strength>

The sample having a width of 25 mm was stuck to a mirror-face stainless steel (SUS) sheet that was an adherend, and then the 180°-peel strength as provided in JIS Z-0237 was measured.

<Holding power>

The sample was stuck to a mirror-face SUS sheet so that the adhesion area would be 1/2 inch × 1 inch, and then the sample was pressurized by a load of 1 kg at 23 °C and 40 °C, and then the falling time was measured.

<Viscosity at 180 °C>

The hot-melt pressure sensitive adhesive was melted by heating to 180 °C, and its melt viscosity was measured with a flow tester (produced by Shimadzu Corporation).

Hereinafter, examples of producing block polymers by use of a polyvalent mercaptan are shown. However, the present invention is not limited to these examples.

(Example 1)

<Synthesis of first polymer segment having glass transition temperature of not lower than 0 °C>

A four-necked flask of 2 liters as equipped with a stirrer, a nitrogen-introducing tube, dropping funnels, a thermometer, and a condenser was charged with 295.5 g of methyl methacrylate and 4.5 g of tetraethylene glycol diacrylate (both as first monomers) and 280.9 g of ethyl acetate (as solvent), and they were heated to 85 °C under a nitrogen atmosphere. After the internal temperature reached 85 °C, 10.5 g of pentaerythritol tetrakisthioglycolate (as polyvalent mercaptan), 0.4 g of azobisisobutyronitrile (as radical polymerization initiator), and 30 g of ethyl acetate (as solvent) were added thereto in order to initiate polymerization. Since after 10 minutes from the initiation of the polymerization, 689.5 g of methyl methacrylate, 10.5 g of tetraethylene glycol diacrylate, 24.5 g of pentaerythritol tetrakisthioglycolate, 0.8 g of azobisisobutyronitrile, and 133.2 g of ethyl acetate were dropwise added thereto over a period of 110 minutes. When the polymerization conversion reached 64.3 % after 170 minutes from the initiation of the polymerization, 0.1 g of methoxyphenol (as polymerization inhibitor) and 592 g of ethyl acetate (as solvent) were added thereto, and then the resultant mixture was cooled to complete the first-stage polymerization.

<Synthesis of star-shaped block polymer utilizing first-stage polymer segment >

A four-necked flask of 2 liters as equipped with a stirrer, a nitrogen-introducing tube, dropping funnels, a thermometer, and a condenser was charged with 70.6 g of polymer solution as obtained in the above first-stage, 151.7

g of butyl acrylate, 73.4 g of 2-ethylhexyl acrylate, 4.9 g of acrylic acid, 14.7 g of succinic acid monohydroxyethyl acrylate, and 282.7 g of ethyl acetate, and they were heated to 85 °C under a nitrogen atmosphere. After the internal temperature reached 85 °C, 0.16 g of azobisisobutyronitrile and 24.5 g of ethyl acetate were added thereto in order to initiate polymerization. Since after 10 minutes from the initiation of the polymerization, 131.0 g of polymer solution as obtained in the above first-stage, 281.8 g of butyl acrylate, 136.3 g of 2-ethylhexyl acrylate, 9.0 g of acrylic acid, 27.2 g of succinic acid monohydroxyethyl acrylate, 0.31 g of azobisisobutyronitrile, and 522.7 g of ethyl acetate were dropwise added thereto over a period of 200 minutes. Each time of after 60, 90, and 120 minutes from the end of the dropwise addition, 0.2 g of azobisisobutyronitrile and 6.0 g of ethyl acetate were added thereto. After the reaction was further carried out under reflux for 2 hours, the second-stage polymerization step was ended, thus obtaining a polymer solution having a solid content of 44.9 %.

The volatile components, such as ethyl acetate (as solvent) and residual monomers, were devolatilized from the resultant reaction liquid with a twin-screw extruder, thus obtaining a star-shaped block polymer as an acrylic block polymer.

Listed in Table 2 are the tackiness properties in the case where the star-shaped block polymer as obtained was used as a hot-melt pressure sensitive adhesive.

(Example 2)

The polymerization with the composition as listed in Table 1 was carried out in the same procedure as of Example 1, thus obtaining a star-shaped block polymer. The post-treatment step and the measurement of properties were carried out in the same way as of Example 1. The tackiness properties are listed in Table 2.

(Comparative Examples 1 and 2)

The polymerizations with the compositions as listed in Table 1 were carried out in the same procedure as of Examples 1 and 2, thus obtaining star-shaped block polymers not including the succinic acid monohydroxyethyl acrylate as a monomer component. The post-treatment step and the measurement of properties were carried out in the same way as of Examples 1 and 2. The tackiness properties are listed in Table 2.

Table 1

| | | | Example | | Comparative Example | |
|---|---|---|---|---|---|---|
| | | | 1 | 2 | 1 | 2 |
| Polymer composition (%) | First stage | MMA | 12.42 | 12.42 | 12.42 | 12.42 |
| | | TEGDA | 0.19 | 0.19 | 0.19 | 0.19 |
| | Second stage | BA | 54.20 | 52.43 | 59.44 | 57.69 |
| | | 2EHA | 26.22 | 26.22 | 26.22 | 26.22 |
| | | AA | 1.73 | 0.88 | 1.73 | 3.48 |
| | | Succinic acid monohydroxyethyl acrylate | 5.24 | 7.86 | — | — |
| Concentration of carboxyl group in polymer (calculated value) ($\times 10^{-4}$ mol/g) | | | 4.85 | 4.85 | 2.42 | 4.85 |
| MMA: methyl methacrylate, TEGDA: tetraethylene glycol diacrylate, BA: butyl acrylate, 2EHA: 2-ethylhexyl acrylate, and AA: acrylic acid. | | | | | | |

Table 2

| | Example | | Comparative Example | |
|---|---|---|---|---|
| | 1 | 2 | 1 | 2 |
| Ball tack (No.) | 9 | 9 | 10 | 6 |
| Adhesive strength (g/25 mm) | 1,395 | 1,385 | 1,098 | 990 |

Table 2 (continued)

| | Example | | Comparative Example | |
|---|---|---|---|---|
| | 1 | 2 | 1 | 2 |
| Holding power at 23 °C (minutes) | >2,880 | >2,880 | 1,154 | >2,880 |
| State of failure | — | — | Adhesive failure | — |
| Holding power at 40 °C (minutes) | >600 | >600 | 54 | >600 |
| State of failure | — | — | Adhesive failure | — |
| Viscosity at 180 °C (mPa·s) | 82,900 | 56,000 | 61,000 | 89,400 |

The holding power as listed in Table 2 is usually a property value representing the cohesive strength of a pressure sensitive adhesive. When the sample fell off, the state of failure of the pressure sensitive adhesive is, generally, cohesive failure. However, when such as a mirror-face-processed SUS sheet is used as an adherend, there is a case where the pressure sensitive adhesive itself does not fail, but where the failure across the interface between the pressure sensitive adhesive and the adherend, which is called adhesive failure, occurs. This is thought to be a phenomenon as caused by inferiority of the adhesion between the pressure sensitive adhesive and the mirror-face-processed adherend to the cohesive strength of the pressure sensitive adhesive.

It would be understood that: when the acrylic acid and the succinic acid monohydroxyethyl acrylate were jointly used like in Examples 1 and 2 (their amounts as used were both 4.85 $\times 10^{-4}$ mol/g), the pressure sensitive adhesive has large ball tack and adhesive strength, and the adhesive failure to the adherend is not caused in the measurement of the holding power, and the pressure sensitive adhesive has good adhesion.

On the other hand, Comparative Example 1 is the case where only the acrylic acid was used in half the amount as used in Examples 1 and 2 (2.42 $\times 10^{-4}$ mol/g). In this case, a good ball-tack value was displayed, but the adhesive failure was caused in a short time at both 23 °C and 40 °C in the measurement of the holding power. Therefrom, it would be understood that the adhesion to the mirror-face SUS is lacking. In addition, Comparative Example 2 is the case where only the acrylic acid was used in an amount equal to that as used in Examples 1 and 2 (4.85 $\times 10^{-4}$ mol/g). In this case, as to the holding power at 23 °C and 40 °C, the adhesive failure is not caused, and the adhesion to the mirror-face SUS is good. However, much lowering of the ball tack is observed.

Accordingly, it would be understood that: the polymer as obtained by copolymerizing a monomer which has a carboxyl group in its molecule and of which the homopolymer has a glass transition temperature of lower than 0 °C, according to the present invention, has a merit such that the good adhesion to the mirror-face-processed adherend is compatible with the good tackiness properties when it is used as a pressure sensitive adhesive.

Incidentally, the glass transition temperature value of each segment of the polymers as produced in the above Examples and Comparative Examples were calculated according to Fox's equation, and they were summarized in Table 3 below.

Table 3

| Calculated Tg (°C) of each polymer segment | | | | |
|---|---|---|---|---|
| | Example 1 | Example 2 | Comparative Example 1 | Comparative Example 2 |
| First polymer segment | 100.2 | 100.2 | 100.2 | 100.2 |
| Second polymer segment | -52.0 | -52.5 | -52.7 | -50.8 |

Hereinafter, an example used as a solvent-type pressure sensitive adhesive is shown.

(Example 3)

A four-necked flask of 2 liters as equipped with a stirrer, a nitrogen-introducing tube, dropping funnels, a thermometer, and a condenser was charged with 70.6 g of polymer solution as obtained in the first-stage of Example 1, 149.2 g of butyl acrylate, 73.4 g of 2-ethylhexyl acrylate, 4.9 g of acrylic acid, 2.5 g of hydroxyethyl acrylate, 14.7 g of succinic acid monohydroxyethyl acrylate, and 282.7 g of ethyl acetate, and they were heated to 85 °C under a nitrogen atmosphere. After the internal temperature reached 85 °C, 0.16 g of azobisisobutyronitrile and 24.5 g of ethyl acetate were added thereto in order to initiate polymerization. Since after 10 minutes from the initiation of the polymerization, 131.0 g of polymer solution as obtained in the first-stage of Example 1, 277.3 g of butyl acrylate, 136.3 g of

2-ethylhexyl acrylate, 9.0 g of acrylic acid, 4.5 g of hydroxyethyl acrylate, 27.2 g of succinic acid monohydroxyethyl acrylate, 0.31 g of azobisisobutyronitrile, and 522.7 g of ethyl acetate were dropwise added thereto over a period of 200 minutes. Each time of after 60, 90, and 120 minutes from the end of the dropwise addition, 0.2 g of azobisisobutyronitrile and 6.0 g of ethyl acetate were added thereto. After the reaction was further carried out under reflux for 2 hours, the second-stage polymerization step was ended, thus obtaining a hydroxyl-group-containing polymer solution having a solid content of 45.1 %.

Colonate L-55E (produced by Nippon Polyurethane Co., Ltd., polyisocyanate compound) as a crosslinking agent was blended with 100 parts of the resultant polymer solution in a combining ratio as listed in Table 4, and the resultant mixture was coated onto a PET film so that the dried-film thickness would be 50 μm, and then dried at 80 °C for 5 minutes. Thereafter, the maturing was carried out at 23 °C for 7 days.

The tackiness properties of the resultant pressure sensitive adhesive tape are listed in Table 4.

From Table 4, it would be understood that the formation of the solvent-type pressure sensitive adhesive by further comprising the crosslinking agent can give a pressure sensitive adhesive having excellent properties at high temperature.

Table 4

| | | | Example 3 |
|---|---|---|---|
| Polymer composition (%) | First stage | MMA 1) | 12.42 |
| | | TEGDA 1) | 0.19 |
| | Second stage | BA 1) | 53.32 |
| | | 2EHA 1) | 26.22 |
| | | AA 1) | 1.73 |
| | | Hydroxyethyl acrylate | 0.88 |
| | | Succinic acid monohydroxyethyl acrylate | 5.24 |
| Crosslinking agent | | Colonate L-55E (parts) 2) | 0.82 |
| Concentration of carboxyl group in polymer (calculated value) ($\times 10^{-4}$ mol/g) | | | 4.85 |
| Ball tack (No.) | | | 8 |
| Adhesive strength (g/25 mm) | | | 1,120 |
| Holding power at 80 °C (minutes) | | | >2,880 |

1) MMA: methyl methacrylate, TEGDA: tetraethylene glycol diacrylate, BA: butyl acrylate, 2EHA: 2-ethylhexyl acrylate, and AA: acrylic acid.
2) Polyisocyanate compound, solid content: 55 % (produced by Nippon Polyurethane Co., Ltd.).

Various details of the invention may be changed without departing from its spirit not its scope. Furthermore, the foregoing description of the preferred embodiments according to the present invention is provided for the purpose of illustration only, and not for the purpose of limiting the invention as defined by the appended claims and their equivalents.

## Claims

1. A block polymer, which is obtained by a process including the step of polymerizing a monomer component including a monomer as an essential component wherein the monomer has a carboxyl group in its molecule and wherein a homopolymer of the monomer has a glass transition temperature of lower than 0 °C.

2. A block polymer according to claim 1, which comprises (meth)acrylate ester structural units in a ratio of 50 to 100 weight % of the entirety and is acrylic.

3. A block polymer according to claim 1 or 2, which is a polymer obtained by a process including a multistage polymerization step in the presence of a polyvalent mercaptan.

4. A block polymer according to claim 3, wherein the multistage polymerization step is a multistage polymerization step which includes at least a first-stage polymerization step and a second-stage polymerization step wherein the

polymerizations in the polymerization steps are carried out using monomer components having compositions different between the polymerization steps.

**5.** A pressure sensitive adhesive composition, which comprises the block polymer as recited in any one of claims 1 to 4.

**6.** A pressure sensitive adhesive composition according to claim 5, which is used for hot-melt coating.

European Patent Office

# EUROPEAN SEARCH REPORT

Application Number
EP 02 01 0479

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 094 086 A (NIPPON CATALYTIC CHEM IND) 25 April 2001 (2001-04-25)<br>* the whole document * | 1-6 | C09J153/00 |
| X | EP 0 686 653 A (NIPPON CATALYTIC CHEM IND) 13 December 1995 (1995-12-13)<br>* the whole document * | 1-6 | |
| X | EP 0 870 793 A (NIPPON CATALYTIC CHEM IND) 14 October 1998 (1998-10-14)<br>* the whole document * | 1-4 | |

TECHNICAL FIELDS SEARCHED (Int.Cl.7)
C09J

The present search report has been drawn up for all claims

| Place of search | Date of completion of the search | Examiner |
|---|---|---|
| MUNICH | 6 September 2002 | Baekelmans, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 02 01 0479

This annex lists the patent family members relating to the patent documents cited in the above-mentioned European search report.
The members are as contained in the European Patent Office EDP file on
The European Patent Office is in no way liable for these particulars which are merely given for the purpose of information.

06-09-2002

| Patent document cited in search report | | Publication date | Patent family member(s) | | Publication date |
|---|---|---|---|---|---|
| EP 1094086 | A | 25-04-2001 | US | 6310175 B1 | 30-10-2001 |
| | | | EP | 1094086 A1 | 25-04-2001 |
| EP 0686653 | A | 13-12-1995 | JP | 2842782 B2 | 06-01-1999 |
| | | | JP | 7179538 A | 18-07-1995 |
| | | | JP | 8165462 A | 25-06-1996 |
| | | | JP | 8176519 A | 09-07-1996 |
| | | | DE | 69420131 D1 | 23-09-1999 |
| | | | DE | 69420131 T2 | 03-02-2000 |
| | | | EP | 0686653 A1 | 13-12-1995 |
| | | | US | 5679762 A | 21-10-1997 |
| | | | CN | 1118167 A ,B | 06-03-1996 |
| | | | WO | 9518162 A1 | 06-07-1995 |
| | | | US | 5869598 A | 09-02-1999 |
| EP 0870793 | A | 14-10-1998 | EP | 0870793 A2 | 14-10-1998 |
| | | | JP | 10338711 A | 22-12-1998 |
| | | | US | 6207762 B1 | 27-03-2001 |

EPO FORM P0459

For more details about this annex : see Official Journal of the European Patent Office, No. 12/82